(19) **Europäisches Patentamt / European Patent Office / Office européen des brevets**

(11) **EP 3 400 654 B1**

(12) **FASCICULE DE BREVET EUROPEEN**

(45) Date de publication et mention de la délivrance du brevet:
**12.06.2024 Bulletin 2024/24**

(21) Numéro de dépôt: **17701036.0**

(22) Date de dépôt: **03.01.2017**

(51) Classification Internationale des Brevets (IPC):
**H04B 5/00** *(2024.01)*

(52) Classification Coopérative des Brevets (CPC):
**H04B 5/00; H04B 5/73**

(86) Numéro de dépôt international:
**PCT/EP2017/050090**

(87) Numéro de publication internationale:
**WO 2017/118636 (13.07.2017 Gazette 2017/28)**

(54) **DISPOSITIF UTILISANT UNE ANTENNE ÉLECTRIQUEMENT PETITE POUR OBTENIR AU MOINS UNE INFORMATION SUR UN OBJET PRÉSENT DANS LE CHAMP PROCHE DE LADITE ANTENNE**

VORRICHTUNG MIT EINER ELEKTRISCH KLEINEN ANTENNE ZUM ERHALT MINDESTENS EINER INFORMATION ÜBER EIN IM NAHFELD DER ANTENNE VORGESEHENES OBJEKT

DEVICE USING AN ELECTRICALLY SMALL ANTENNA FOR OBTAINING AT LEAST ONE PIECE OF INFORMATION ON AN OBJECT PROVIDED IN THE NEAR FIELD OF SAID ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2016 FR 1650003**

(43) Date de publication de la demande:
**14.11.2018 Bulletin 2018/46**

(73) Titulaire: **Commissariat à l'Énergie Atomique et aux Énergies Alternatives
75015 Paris (FR)**

(72) Inventeur: **DELAVEAUD, Christophe
38430 Saint-Jean de Moirans (FR)**

(74) Mandataire: **Novaimo
Europa 1
362, avenue Marie Curie
Archamps Technopole
74166 Saint-Julien-en-Genevois Cedex (FR)**

(56) Documents cités:
**EP-A2- 2 552 030     US-A1- 2015 233 987**

- **HUITEMA LAURE ET AL: "Impedance and Radiation Measurement Methodology for Ultra Miniature Antennas", IEEE TRANSACTIONS ON ANTENNAS AND PROPAGATION, IEEE SERVICE CENTER, PISCATAWAY, NJ, US, vol. 62, no. 7, 2 juillet 2014 (2014-07-02), pages 3463-3473, XP011552845, ISSN: 0018-926X, DOI: 10.1109/TAP.2014.2320534 [extrait le 2014-07-02]**

**Description**

**Domaine technique de l'invention**

L'invention concerne le domaine des capteurs.

L'invention a pour objet plus particulièrement un dispositif comprenant une antenne électriquement petite.

**État de la technique**

Le domaine des capteurs est vaste et englobe un grand nombre de technologies allant des capteurs capacitifs, inductifs, magnétiques, à ultrasons, optiques, etc.

L'association de capteurs avec des antennes UHF (« Ultra Haute Fréquence ») constitue un domaine de recherche plus récent en plein essor.

Une première catégorie de travaux cherche à associer un capteur à la fonction d'émission radiofréquence de l'antenne. Il s'agit d'associer un capteur (humidité, concentration en gaz, mouvement, température, pression, contrainte, radioactivité, courant) à une électronique de conversion numérique, de traitement et de modulation pour émettre/recevoir les informations du capteur via l'antenne. L'objectif est donc de transmettre sans fil des informations du capteur grâce à un système de transmission radiofréquence. Une version simplifiée de cette approche peut être la technologie de radio-identification RFID (de l'anglais Radio Frequency Identification ») qui présente l'avantage d'un lien radiofréquence dissymétrique avec d'un côté un dispositif qui peut être passif ou faiblement consommant (coté capteur).

Une deuxième catégorie de travaux associe plus directement un élément spécifique réalisant la fonction de capteur à l'antenne de sorte à s'affranchir de l'électronique de numérisation et du transmetteur radiofréquence. Une illustration peut être donnée avec les capteurs SAW (de l'anglais « Surface Acoustic Wave ») connectés aux antennes pour réaliser différentes fonctions de capteurs passifs interrogeables à distance (température, pression, humidité).

Le document US2015/233987A1 décrit également une méthode de détection d'un objet avec une antenne électriquement petite.

Il existe donc un besoin de proposer de nouvelles solutions pour permettre d'ajouter des fonctionnalités à des produits sans complexifier la fabrication de ces produits.

**Objet de l'invention**

Le but de la présente invention est de proposer un nouveau produit utilisant une antenne pour former un capteur.

Selon l'invention, le dispositif comprend une antenne électriquement petite. Le dispositif comporte un module de traitement comportant un élément de mesure relié à l'antenne pour mesurer au moins un paramètre de l'antenne sur une gamme de fréquences de fonctionnement de l'antenne. Le module de traitement est configuré pour utiliser un décalage en fréquence d'un pic d'impédance dudit au moins un paramètre mesuré pour obtenir au moins une information de taille, de position ou de nature de matériau relative à un objet placé dans un champ proche de l'antenne.

Le dispositif peut comporter une frontière entre le champ proche de l'antenne et le champ lointain de l'antenne. La frontière est délimitée par une surface d'une sphère de délimitation dont le rayon est sensiblement égal à $\lambda/(2\pi)$ lorsque l'antenne est située au centre de ladite sphère de délimitation, où $\lambda$ correspond à une longueur d'onde de fonctionnement de l'antenne.

L'antenne peut être en totalité incluse dans une sphère de dimensionnement dont le rayon est inférieur à $\lambda/10$ lorsque l'antenne est située au centre de ladite sphère de dimensionnement, où $\lambda$ correspond à la longueur d'onde de fonctionnement de l'antenne.

Le dispositif peut comporter un module d'émission/réception relié à ladite antenne de sorte à permettre l'émission et/ou la réception de données.

Le dispositif peut comporter un mode de fonctionnement dans lequel au moins certaines mesures réalisées par l'élément de mesure n'inhibent pas la réception et/ou l'émission desdites données ou aucune mesure réalisée par l'élément de mesure n'inhibe la réception et/ou l'émission desdites données.

Le dispositif peut comprendre un coupleur directif du module de traitement couplé à l'antenne mettant en oeuvre un tel mode de fonctionnement. Avantageusement, l'élément de mesure est connecté à l'antenne via ce coupleur directif afin de mettre en oeuvre ce mode de fonctionnement.

L'élément de mesure peut être un élément de mesure d'un paramètre représentatif de l'impédance de l'antenne L'antenne peut présenter un facteur de qualité à vide supérieur à 10.

L'élément de mesure peut être un détecteur scalaire ou vectoriel relié à l'antenne.

Selon l'invention, le procédé de déterminer au moins une information relative à un objet à l'aide d'une antenne électriquement petite. Le procédé comporte les étapes suivantes :

- un placement dudit objet dans un champ proche de l'antenne,

- une mesure d'au moins un paramètre d'impédance de l'antenne sur une gamme de fréquences de fonctionnement de l'antenne,

- une extraction d'une donnée relative à un pic d'impédance de l'antenne,

- une étape d'observation d'un décalage en fréquence du pic d'impédance de l'antenne,

- une utilisation dudit décalage en fréquence du pic d'impédance de sorte à obtenir l'au moins une information de taille, de position ou de nature de matériau relative audit objet placé dans le champ proche de l'antenne.

L'étape d'utilisation peut comporter une étape de comparaison dudit au moins un paramètre mesuré, ou d'une valeur déterminée à partir dudit au moins un paramètre mesuré, avec des données de traitement.

L'étape de mesure dudit au moins un paramètre peut comporter une mesure d'une valeur représentative de l'impédance de l'antenne.

L'étape d'utilisation peut comporter une étape une détermination d'une partie réelle et/ou d'une partie imaginaire de l'impédance de l'antenne à partir dudit au moins un paramètre mesuré.

Le dispositif peut comporter une étape d'extraction d'une donnée relative à un pic d'impédance de l'antenne et/ou une étape d'extraction du facteur de qualité associé à une partie réelle et/ou imaginaire de l'impédance d'antenne.

La donnée relative au pic d'impédance extraite et/ou le facteur de qualité extrait peut être comparé à des données de traitement de sorte à déterminer ladite au moins une information relative audit objet placé dans le champ proche de l'antenne.

L'au moins une information relative audit objet peut être choisie parmi au moins l'une des informations suivantes : la nature de l'objet, une dimension de l'objet, une position de l'objet par rapport à l'antenne.

Le procédé peut comporter une étape de détection dudit objet dans le champ proche de l'antenne, lesdites étapes de mesure d'au moins un paramètre de l'antenne, et d'utilisation dudit au moins un paramètre mesuré étant mises en oeuvre uniquement lorsque l'objet est détecté dans le champ proche.

L'invention porte encore sur un procédé de fonctionnement d'un dispositif tel que défini précédemment. Ce procédé comprend un mode de fonctionnement dans lequel au moins certaines mesures réalisées par l'élément de mesure n'inhibent pas la réception et/ou l'émission desdites données ou dans lequel aucune mesure réalisée par l'élément de mesure n'inhibe la réception et/ou l'émission desdites données.

## Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 illustre schématiquement un dispositif selon un mode d'exécution de l'invention coopérant avec un objet,
- la figure 2 illustre schématiquement les zones de champ proche et de champ lointain associés à une antenne selon l'exécution de l'invention,
- les figures 3 et 4 illustrent deux modes de réalisation permettant de former une partie du dispositif,
- la figure 5 illustre un mode de réalisation d'une antenne selon un mode d'exécution particulier de l'invention,
- les figures 6 à 11 illustrent des courbes d'évolution de la partie réelle de l'impédance de l'antenne en fonction de la fréquence pour différentes configurations de l'objet,
- la figure 12 illustre des courbes d'évolution de la partie imaginaire de l'impédance de l'antenne en fonction de la fréquence pour différentes configurations de l'objet,
- la figure 13 illustre différentes étapes de mise en oeuvre du procédé selon un mode d'exécution particulier de l'invention.

## Description de modes préférentiels de l'invention

Le dispositif et le procédé proposés et décrits ci-après permettent d'utiliser une antenne électriquement petite pour former un capteur de contexte. Par « capteur de contexte », on entend un capteur capable de déterminer à partir d'une antenne électriquement petite ce qui se passe dans le champ proche de ladite antenne électriquement petite. En ce sens, contrairement aux utilisations usuelles d'une antenne électriquement petite, il est proposé ici d'utiliser une propriété de sensibilité de l'antenne électriquement petite, habituellement considérée comme un problème, pour obtenir une information sur le contexte proche de ladite antenne.

Dans la présente description, une « antenne électriquement petite » possède un sens bien défini que connaît l'homme du métier. En particulier, une antenne électriquement petite est définie comme une antenne incluse dans un volume plus petit que la sphère "radiante" (connue sous le terme anglais « radiansphere ») au sens de H. A Wheeler. Une définition plus poussée peut être extraite du document « The Radiansphere Around a small antenna » d'Harold A. Wheeler tiré de « Proceedings of the IRE » de 1959 pages 1325 à 1331.

Dans la suite de la description, l'antenne visée utilisée dans le cadre du dispositif ou du procédé est une antenne électriquement petite.

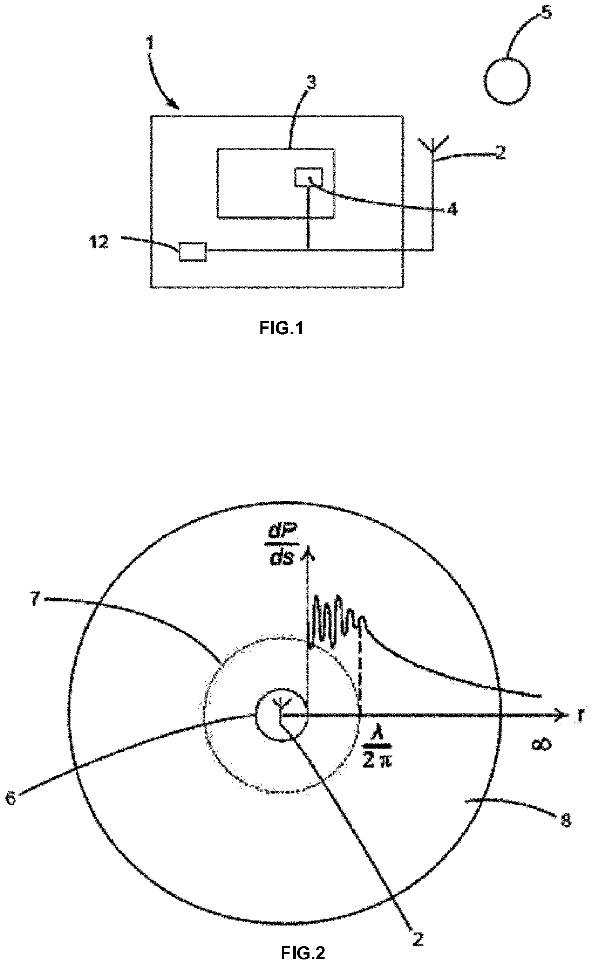

Comme illustré en figure 1, le dispositif 1 comprend une antenne 2 électriquement petite, et un module de traitement 3 d'un objet 5 placé dans le champ proche de l'antenne 2, c'est-à-dire un module de traitement de données de l'objet 5 placé dans le champ proche de l'antenne 2. Autrement dit, le dispositif 1 peut, dans un état de fonctionnement, être associé à l'objet 5 alors placé dans le champ proche. Le module de traitement 3 comporte un élément de mesure 4 relié à l'antenne 2 pour mesurer au moins un paramètre de l'antenne 2. Le module de traitement 3 est configuré pour utiliser ledit au moins un paramètre mesuré pour obtenir au moins une information relative audit objet 5 placé dans le champ proche de l'antenne 2.

Le dispositif 1 comprend également un module 12 d'émission et/ou de réception relié à l'antenne 2. Le module 12 peut être dissocié du module 3 (comme sur la figure 1) ou alternativement faire partie d'un même module.

Dans le domaine, le champ proche de l'antenne 2 est aussi connu sous la dénomination de champ réactif de l'antenne 2.

Dans la présente description, l'objet 5 est à prendre au sens large selon une définition englobant tout type d'objet, toute partie d'objet ou toute partie d'un corps humain ou animal.

Le paramètre mesuré est différent d'informations issues d'une émission ou d'une réception utilisant l'antenne 2. Autrement dit, le module de traitement 3 (et plus particulièrement l'élément de mesure 4) sont distincts du module 12 d'émission et/ou de réception relié à l'antenne 2. En ce sens, ledit au moins un paramètre mesuré permet de déterminer un paramètre physique de l'antenne 2 apte à être interprété pour en déduire ladite au moins une information relative à l'objet 5. Ledit au moins un paramètre mesuré est représentatif d'une propriété de sensibilité de l'antenne 2, notamment l'impédance de l'antenne 2 comme il sera décrit plus en détails ci-après.

On comprend alors que le module de traitement 3 comporte les moyens logiciels et/ou matériels permettant l'exploitation dudit au moins un paramètre mesuré pour déduire ladite au moins une information relative à l'objet 5.

Les antennes électriquement petites présentent des performances limitées résultant d'une conversion onde guidée/onde rayonnée partiellement réalisée dans le volume restreint qu'elles occupent. L'épanouissement des champs électrique et magnétique au voisinage d'une structure rayonnante compacte présente classiquement deux zones distinctes: une zone de champ proche réactif non rayonnant et une zone de champ lointain où le champ propageant se forme.

La figure 2 illustre justement un volume 6 dans lequel se situe l'antenne 2. Ce volume 6 est englobé dans un volume 7 plus grand délimitant le champ proche de l'antenne 2, lui-même englobé dans un volume 8 correspondant au champ lointain de l'antenne 2. La figure 2 illustre en outre l'évolution de la densité de puissance à partir de l'antenne 2 vers une direction r s'éloignant de l'antenne 2 vers l'infini.

En particulier, la comparaison entre le volume 6 et le volume 7 permet de définir l'antenne électriquement petite selon le sens indiqué précédemment.

Autrement dit, le dispositif peut être tel qu'il comporte une frontière entre le champ proche de l'antenne 2 et un champ lointain de l'antenne 2. Cette frontière est délimitée par une surface d'une sphère de délimitation 7 (figure 2) dont le rayon est sensiblement égal à $\lambda/(2\pi)$ lorsque l'antenne 2 est située au centre de ladite sphère de délimitation 7, où $\lambda$ correspond à la longueur d'onde de fonctionnement de l'antenne 2. Par « sensiblement égal », on entend ici que le rayon de la sphère de délimitation est égal à $\lambda/(2\pi)$ en appliquant plus ou moins une marge d'erreur de 10% dans le cas réel. Dans le cas théorique d'une antenne 2, le rayon de la sphère de délimitation 7 est considéré comme égal à $\lambda/(2\pi)$ (on parle alors ici de rayon théorique).

En outre, selon la définition de l'antenne électriquement petite, l'antenne 2 est en totalité incluse dans le volume d'une sphère de dimensionnement 6 dont le rayon est inférieur à $\lambda/10$, de préférence inférieur à $\lambda/(4\pi)$, lorsque l'antenne 2 est située au centre de ladite sphère de dimensionnement 6, où $\lambda$ correspond à la longueur d'onde de fonctionnement de l'antenne 2. En combinaison avec la notion de frontière entre le champ proche et le champ lointain de l'antenne, les sphères de dimensionnement et de délimitation ont un même centre qui coïncide avec le centre de l'antenne 2.

Autrement dit, une antenne électriquement petite peut être considérée comme petite par rapport à la longueur d'onde de fonctionnement de l'antenne 2 qui est fonction de la fréquence de fonctionnement de l'antenne 2. En ce sens, de manière générale, une partie de l'antenne 2 peut être reliée à un élément constitutif de l'antenne fixant sa fréquence de fonctionnement.

En ayant des dimensions très inférieures à la limite de champ réactif non rayonnant ($\lambda/\pi$), les antennes électriquement petites sont sensibles à leur proche contexte en fonction de ce qui peut être placé dans cette zone particulière de champ proche de l'antenne 2. La perturbation des champs réactifs dans la zone de champ proche de l'antenne 2 est susceptible de modifier le comportement de l'antenne 2, de changer ses propriétés et notamment son impédance d'entrée. Dans la présente description une impédance d'entrée ou l'impédance de l'antenne représente la même chose. Les documents EP2509222 et EP2509227 décrivent notamment le problème de perturbation de l'impédance d'une antenne, et proposent seulement un système permettant d'adapter l'impédance de l'antenne à son milieu pour optimiser son fonctionnement. La présente invention propose de manière inédite d'utiliser ces perturbations de l'impédance pour obtenir des informations quant à l'objet 5 perturbateur de l'impédance de l'antenne 2 lorsque l'objet est placé dans le champ proche de l'antenne 2. Autrement dit, l'idée est alors d'utiliser les modifications de l'impédance de l'antenne 2 pour réaliser une fonction de détection de proximité et/ou de propriété(s) de l'objet 5 alors appelé objet perturbateur. La caractérisation du type de perturbation observé sur l'impédance de l'antenne 2 peut notamment être utilisée pour déterminer la nature de l'objet (matériaux conducteur, diélectrique, magnétique), sa taille et sa position (distance par rapport à l'antenne 2). Ces fonctionnalités peuvent être exploitées simultanément à la transmission des ondes électromagnétiques entre un milieu guidé et ouvert (rôle classique de l'antenne).

En ce sens, l'élément de mesure 4 est avantageusement configuré de sorte à mesurer un paramètre représentatif de l'impédance de l'antenne 2. Dans le domaine des micro-ondes, ce paramètre mesuré est préférentiellement un coefficient de réflexion (noté paramètre S).

En fait, le paramètre représentatif de l'impédance de l'antenne 2 peut permettre de déterminer une impédance de l'antenne 2 qui est un nombre complexe. A partir de ce nombre complexe, il est possible d'exploiter la partie réelle et/ou la partie imaginaire qui sont des valeurs liées entre elles.

Plus généralement, les modifications du champ réactif de l'antenne 2 par l'objet 5 sont susceptibles d'altérer à la fois son rayonnement mais également son impédance. Pour déterminer les modifications du champ réactif de l'antenne 2, il peut être utilisé un élément de mesure 4 de type scalaire ou vectorielle connecté directement à l'antenne 2 ou via un coupleur directif afin de ne pas perturber le fonctionnement de l'antenne 2 avec son transmetteur radiofréquence si cette dernière assure aussi une fonction d'émission et/ou de réception de données. La détection scalaire donne une information sur la fréquence et l'amplitude du coefficient de réflexion de l'antenne 2. A partir de ces informations, il est possible de caractériser une information relative à l'objet placé dans le champ proche de l'antenne. La mesure vectorielle permet de caractériser l'impédance complexe de l'antenne et fournit des informations plus complètes sur les altérations. Préférentiellement, il n'est utilisé ici que l'information d'altération de l'impédance. La mesure des perturbations de l'impédance de l'antenne 2 par l'élément de mesure 4 permet d'obtenir une information sur le contexte proche de l'antenne 2 notamment sur l'objet 5 présent dans le champ proche.

Ainsi, on comprend que le paramètre représentatif de l'impédance de l'antenne 2 évoqué précédemment peut être directement l'impédance ou un paramètre permettant de déduire cette impédance de l'antenne 2.

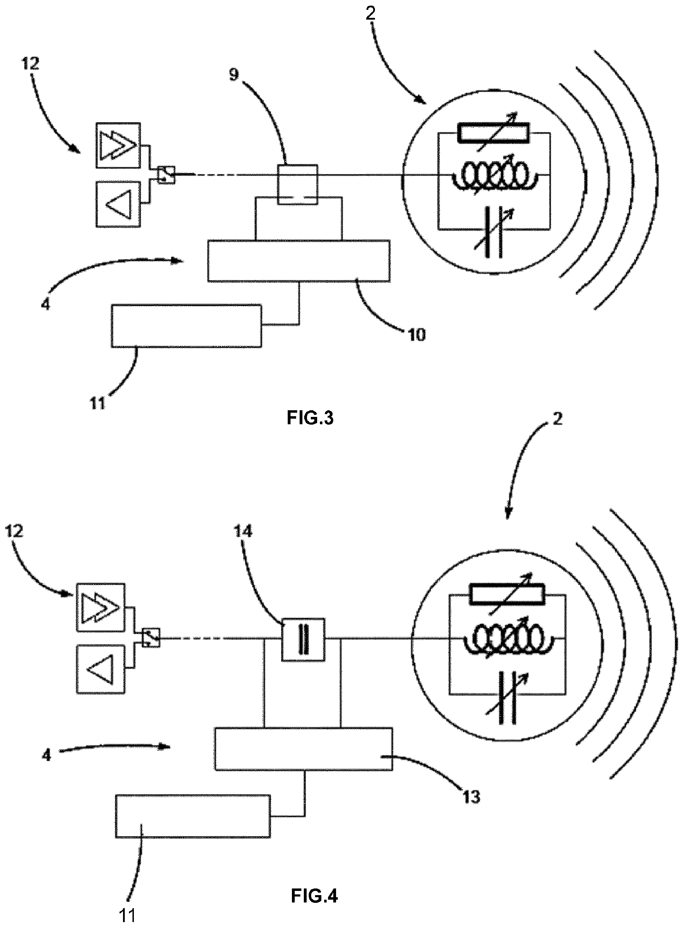

Selon une réalisation (figure 1), le dispositif 1 comporte un module d'émission/réception 12 relié à ladite antenne 2 pour permettre l'émission et/ou la réception de données par l'antenne 2. En ce sens, l'antenne 2 peut être utilisée dans un mode de traitement d'un objet 5 et dans un mode conventionnel d'émission et/ou de réception de données. Ces modes ne sont pas exclusifs dans le cadre où un objet 5 peut être traité par le module de traitement 3 concomitamment à l'émission et/ou réception de données. Autrement dit, le dispositif peut comporter un mode de fonctionnement dans lequel chaque mesure réalisée par l'élément de mesure 4 n'inhibe pas (ou ne perturbe pas) la réception et/ou l'émission desdites données. Ceci peut notamment être mis en oeuvre par l'utilisation d'un coupleur directif du module de traitement couplé à l'antenne 2, bien entendu il ne s'agit que d'un exemple, d'autres méthodes peuvent être mises en oeuvre (comme par exemple à la figure 4 où la capacité 14 réalise cette fonction). Ainsi, l'invention porte encore sur un procédé de fonctionnement du dispositif 1. Ce procédé comprend donc un mode de fonctionnement dans lequel au moins certaines mesures réalisées par l'élément de mesure n'inhibent pas la réception et/ou l'émission desdites données ou dans lequel aucune mesure réalisée par l'élément de mesure n'inhibe la réception et/ou l'émission desdites données.

Comme évoqué précédemment, l'élément de mesure 4 peut être un détecteur scalaire ou vectoriel relié à l'antenne 2.

La figure 3 illustre un schéma de principe de l'antenne 2 couplée à un détecteur scalaire. En particulier, l'élément de mesure 4 comporte ici un coupleur 9 couplé à l'antenne 2 (notamment à l'entrée de l'antenne 2), un détecteur de puissance 10 relié au coupleur 9 et un module de contrôle 11 permettant de déterminer la valeur dudit au moins un paramètre de l'antenne 2 mesuré. La référence 12 montre un module d'émission/réception relié à l'antenne 2. L'avantage ici est que le coupleur 9 permet une mesure sans modifier le comportement de l'antenne 2 qui peut alors concomitamment travailler en mode d'émission et/ou de réception de données.

La figure 4 illustre un schéma de principe de l'antenne 2 reliée à un détecteur vectoriel 13 d'impédance de l'antenne 2 appartenant à l'élément de mesure 4. Le détecteur vectoriel 13 est relié en parallèle à un composant 14 monté en série entre l'antenne 2 et le module d'émission et/ou de réception 12. Le composant 14 est une capacité correctement dimensionnée permettant d'inhiber ou de limiter les perturbations des émissions/réceptions du module 12. En outre, l'élément de mesure 4 comporte un module de contrôle 11 relié au détecteur vectoriel et permettant de déterminer la valeur dudit au moins un paramètre de l'antenne 2 mesuré. La référence 12 montre un module d'émission/réception relié à l'antenne 2.

L'analyse des perturbations concerne préférentiellement uniquement l'impédance présentée par l'antenne 2 soumise à des perturbations de son proche contexte de fonctionnement. Les variations observées peuvent concerner le facteur de qualité, le changement de fréquence, la partie réelle et imaginaire de l'impédance. Selon le type d'antenne 2 (du type générant plutôt un champ électrique ou du type générant plutôt un champ magnétique), des comportements différents en fonction de la nature des objets perturbants peuvent être identifiés. Ainsi, une caractérisation du type d'objet 5 perturbateur peut être mise au point. Pour un type d'objets 5 perturbateurs donné, l'ampleur de la perturbation observée peut renseigner sur la proximité de l'objet et/ou la taille de l'objet. Les informations recueillies selon les scénarios et grâce à un étalonnage du dispositif peuvent donc donner des informations qualitatives ou quantitatives.

La suite de la description donne un exemple particulier d'exploitation des données relatives à l'impédance pour traiter l'objet 5, notamment pour le caractériser afin d'en savoir plus.

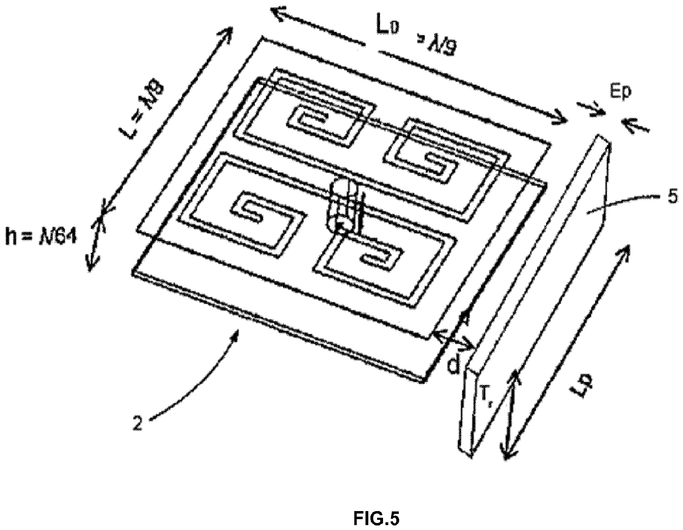

Dans cet exemple particulier, il a été utilisé une antenne du type de celle illustrée en figure 5 associée à un objet 5 venant la perturber. Sur la figure 5, $\lambda$ représente la longueur d'onde de fonctionnement de l'antenne 2, h la hauteur de l'antenne 2, L la largeur de l'antenne 2, Lo la longueur de l'antenne 2. L'objet 5 est de forme parallélépipédique et présente une épaisseur Ep, une dimension transversale Tr et une dimension longitudinale Lp. La référence d correspond à une distance de séparation entre l'antenne 2 et l'objet 5.

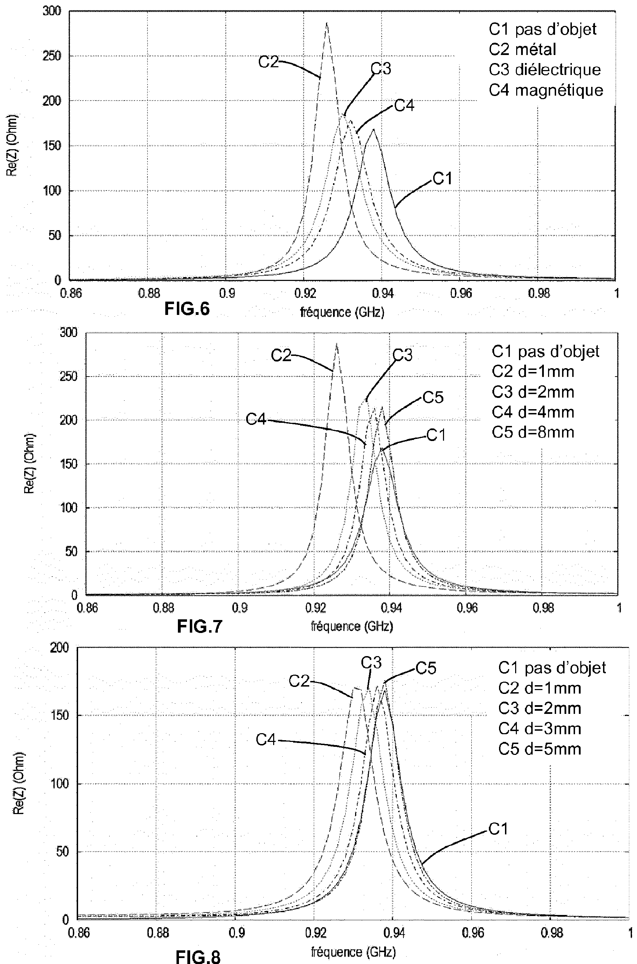

Avantageusement, l'antenne 2 de la figure 5 est de forme parallélépipédique de largeur L et longueur Lo égales à 36 mm, et de hauteur h 5 mm. Elle fonctionne au voisinage de 930 MHz, ce qui lui confère des dimensions électriques de l'ordre de $\lambda/9 \times \lambda/9 \times \lambda/64$. Le rayon de la sphère (sphère de dimensionnement) englobant l'antenne 2 est alors d'environ $\lambda/12,6$. C'est notamment cette antenne qui va être utilisée pour l'établissement des figures 6 à 12.

La figure 6 illustre l'influence de la nature du matériau de l'objet situé à d = 1 mm sur la partie réelle de l'impédance (dimensions Lp =160 mm, Ep = 5 mm, Tr = 160 mm) en fonction de la fréquence. En fait, au sens large, on observe l'impédance de l'antenne sur une gamme de fréquences, un phénomène résonnant est observable. La figure 6 représente notamment différents types de matériaux perturbateurs situés à d=1 mm de l'extrémité de l'antenne 2. La courbe C1 illustre la partie réelle de l'impédance en fonction de la fréquence lorsqu'aucun objet 5 n'est présent dans le champ proche de l'antenne, la courbe C2 illustre la partie réelle de l'impédance en fonction de la fréquence lorsque le matériau de l'objet 5 est du métal, la courbe C3 illustre la partie réelle de l'impédance en fonction de la fréquence lorsque le matériau de l'objet est un diélectrique, la courbe C4 illustre la partie réelle de l'impédance en fonction de la fréquence lorsque le matériau de l'objet 5 est magnétique. On constate alors que les perturbations sont différentes (décalage en fréquence, changement amplitude, facteur de qualité de la résonance) en fonction du type de matériau. Une discrimination de la nature du matériau est donc possible à position et dimensions données de matériau perturbateur formant l'objet 5.

La figure 7 montre l'influence de la distance séparant l'antenne 2 (du type de la figure 5) de l'objet 5 sur la partie réelle de l'impédance lorsque le corps 5 est une plaque métallique de dimensions Lp =160 mm, Ep = 5 mm, Tr = 160 mm. Sur cette figure 7, la courbe C1 représente la partie réelle de l'impédance de l'antenne 2 en fonction de la fréquence lorsque l'objet 5 n'est pas présent, la courbe C2 représente la partie réelle de l'impédance de l'antenne 2 en fonction de la fréquence lorsque la distance d est de 1 mm, la courbe C3 représente la partie réelle de l'impédance de l'antenne 2 en fonction de la fréquence lorsque la distance d est de 2mm, la courbe C4 représente la partie réelle de l'impédance de l'antenne 2 en fonction de la fréquence lorsque la distance d est de 4mm, et la courbe C5 représente la partie réelle de l'impédance de l'antenne 2 en fonction de la fréquence lorsque la distance d est de 8mm. Ici, on relève un décalage en fréquence d'autant plus prononcé que la plaque métallique 5 est proche de l'antenne 2. On observe également une augmentation progressive de l'amplitude (facteur de qualité) de la résonance avec la réduction de l'espacement d. Une information sur la distance de la plaque métallique peut donc être extraite de l'observation de l'évolution de l'impédance après une phase de calibrage par exemple.

La figure 8 montre l'influence de la distance d sur la partie réelle de l'impédance dans le cas d'une plaque diélectrique en tant qu'objet 5 avec comme permittivité électrique $\varepsilon_r$=10 de dimensions Lp =160 mm, Ep= 5 mm, Tr = 160 mm. Sur cette figure 8, la courbe C1 représente la partie réelle de l'impédance de l'antenne 2 en fonction de la fréquence lorsque l'objet 5 n'est pas présent, la courbe C2 représente la partie réelle de l'impédance de l'antenne 2 en fonction de la fréquence lorsque la distance d est de 1mm, la courbe C3 représente la partie réelle de l'impédance de l'antenne 2 en fonction de la fréquence lorsque la distance d est de 2mm, la courbe C4 représente la partie réelle de l'impédance de l'antenne 2 en fonction de la fréquence lorsque la distance d est de 3mm, et la courbe C5 représente la partie réelle de l'impédance de l'antenne 2 en fonction de la fréquence lorsque la distance d est de 5mm. On note uniquement un décalage en fréquence d'autant plus prononcé que la plaque diélectrique 5 est proche de l'antenne 2. Une information sur la distance de l'objet 5 diélectrique peut être extraite de l'observation de l'évolution de l'impédance après une phase de calibrage par exemple. La stabilité de l'amplitude de la résonance avec l'espacement du matériau diélectrique peut être mise à profit pour discriminer un objet métallique d'un objet diélectrique.

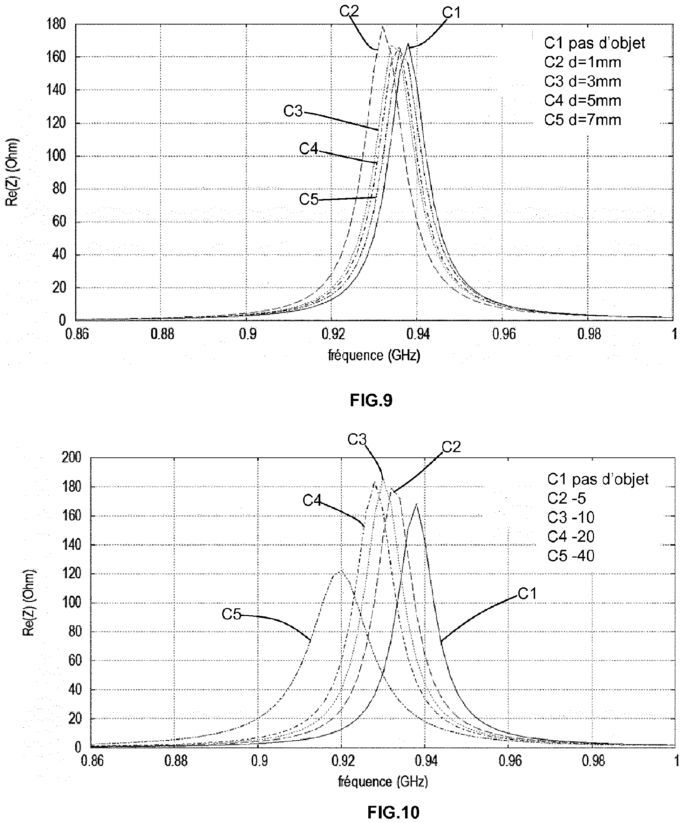

La figue 9 montre l'influence de la distance d sur la partie réelle de l'impédance de l'antenne 2 de la figure 5 dans le cas d'un objet 5 formé par une plaque magnétique de perméabilité magnétique $\mu_r$=10, et de dimensions Lp =160 mm, Ep = 5 mm, Tr = 160 mm. Sur cette figure 9, la courbe C1 représente la partie réelle de l'impédance de l'antenne 2 en fonction de la fréquence lorsque l'objet 5 n'est pas présent, la courbe C2 représente la partie réelle de l'impédance de l'antenne 2 en fonction de la fréquence lorsque la distance d est de 1mm, la courbe C3 représente la partie réelle de l'impédance de l'antenne 2 en fonction de la fréquence lorsque la distance d est de 3 mm, la courbe C4 représente la partie réelle de l'impédance de l'antenne 2 en fonction de la fréquence lorsque la distance d est de 5mm, et la courbe C5 représente la partie réelle de l'impédance de l'antenne 2 en fonction de la fréquence lorsque la distance d est de 7mm. On note uniquement un décalage en fréquence d'autant plus prononcé que la plaque magnétique 5 est proche de l'antenne 2. Une information sur la distance de la plaque magnétique 5 peut être extraite de l'observation de l'évolution de l'impédance après une phase de calibrage par exemple. La stabilité de l'amplitude de la résonance avec l'espacement du matériau magnétique est une information de différenciation d'un objet métallique. On peut également souligner que la variation fréquentielle est moindre avec le matériau magnétique qu'avec le matériau diélectrique. On attribue ce phénomène à la nature électrique de l'antenne 2. En effet, une antenne 2 de type dipôle magnétique devrait présenter un comportement dual vis-à-vis des matériaux électrique et magnétique.

La figure 10 montre l'influence de l'épaisseur Ep d'un matériau diélectrique ($\varepsilon_r$=10, d = 1 mm, Lp =160 mm, Ep variable avec notamment comme valeur de départ 5 mm, Tr = 160 mm) sur la partie réelle de l'impédance. Sur cette figure 10, la courbe C1 représente la partie réelle de l'impédance de l'antenne 2 en fonction de la fréquence lorsque le objet 5 n'est pas présent, la courbe C2 représente la partie réelle de l'impédance de l'antenne 2 en fonction de la fréquence lorsque l'épaisseur Ep est de 5mm, la courbe C3 représente la partie réelle de l'impédance de l'antenne 2 en fonction de la fréquence lorsque l'épaisseur Ep est de 10mm, la courbe C4 représente la partie réelle de l'impédance de l'antenne 2 en fonction de la fréquence lorsque l'épaisseur Ep est de 20mm, et la courbe C5 représente la partie réelle de l'impédance de l'antenne 2 en fonction de la fréquence lorsque l'épaisseur Ep est de 40mm. On note un décalage en fréquence progressif avec l'épaisseur de l'objet 5 dont le matériau est connu. Une information sur l'épaisseur de l'objet 5 peut être extraite de l'observation de l'évolution de la fréquence de résonance après une phase de calibrage par exemple. La variation de l'amplitude de la résonance avec l'épaisseur de l'objet 5 en matériau diélectrique n'est pas monotone. Ce comportement est surement lié à des phénomènes de résonance dans le matériau. Cela limite l'exploitation d'information simple avec ce seul critère. On peut avantageusement utiliser le facteur de qualité associé à l'antenne 2 qui semble diminuer avec la taille de l'objet 5 pour compléter l'analyse des perturbations.

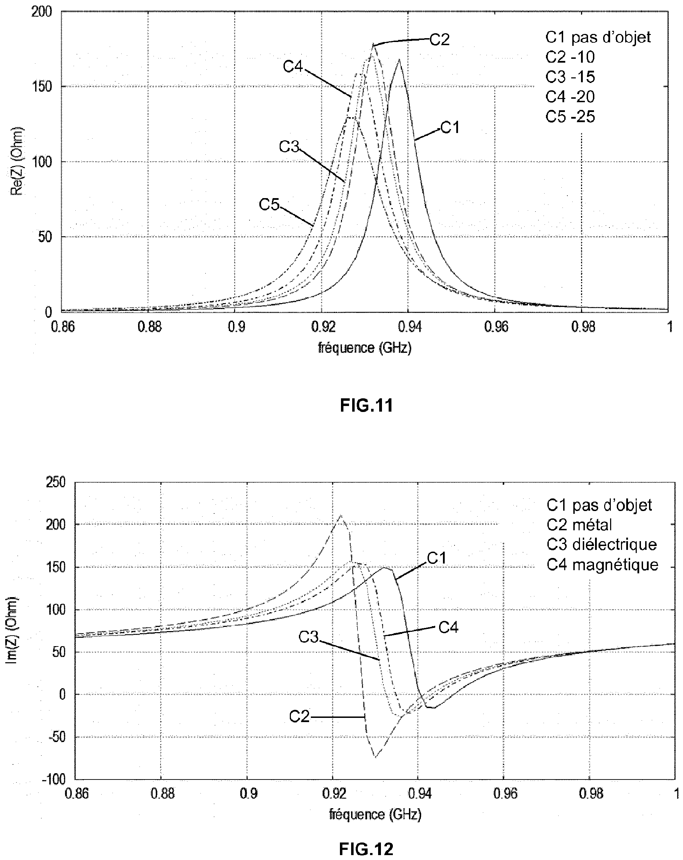

La figure 11 montre l'influence de l'épaisseur d'un objet 5 en un matériau magnétique situé à 1mm de l'antenne ($\mu_r$=10, d = 1 mm, Lp =160 mm, Ep variable) sur la partie réelle de l'impédance de l'antenne 2 selon la figure 5. Sur cette figure 11, la courbe C1 représente la partie réelle de l'impédance de l'antenne 2 en fonction de la fréquence lorsque l'objet 5 n'est pas présent, la courbe C2 représente la partie réelle de l'impédance de l'antenne 2 en fonction de la fréquence lorsque l'épaisseur Ep est de 10mm, la courbe C3 représente la partie réelle de l'impédance de l'antenne 2 en fonction de la fréquence lorsque l'épaisseur Ep est de 15mm, la courbe C4 représente la partie réelle de l'impédance de l'antenne 2 en fonction de la fréquence lorsque l'épaisseur Ep est de 20mm, et la courbe C5 représente la partie réelle de l'impédance de l'antenne 2 en fonction de la fréquence lorsque l'épaisseur Ep est de 25mm. On note un décalage en fréquence progressif avec l'épaisseur de l'objet 5 formé en matériau magnétique. Une information sur l'épaisseur de l'objet 5 peut être extraite de l'observation de l'évolution de la fréquence de résonance après une phase de calibrage par exemple. On peut également souligner que la variation fréquentielle est moindre avec le matériau magnétique qu'avec le matériau diélectrique. On attribue ce phénomène à la nature électrique de l'antenne 2. Une antenne de type dipôle magnétique devrait présenter un comportement dual vis-à-vis des matériaux électrique et magnétique. En fait, une dualité est observée au niveau des effets des matériaux magnétiques sur les antennes électriques, et au niveau des effets des matériaux électriques sur les antennes magnétiques. La variation de l'amplitude de la résonance avec l'épaisseur de l'objet 5 en matériau magnétique n'est pas monotone. Ce comportement est surement lié à des phénomènes de résonance dans le matériau. Cela limite l'exploitation d'information simple avec ce seul critère. Comme pour le matériau diélectrique, on peut avantageusement utiliser le facteur de qualité qui semble diminuer avec la taille de l'objet pour compléter l'analyse des perturbations.

Les exemples donnés ci-dessus permettent d'obtenir des informations quant à l'objet 5 à partir de la partie réelle de l'impédance de l'antenne 2. Comme évoqué précédemment, la partie imaginaire peut aussi être utilisée. En particulier, la figure 12 illustre la partie imaginaire associée à la figure 6. On en déduit clairement que des informations sont exploitables en fonction du matériau de l'objet 5. La partie imaginaire est généralement liée à la partie réelle concernant les phénomènes résonnants (facteur de qualité). Le niveau moyen de la partie imaginaire peut être exploité en plus pour donner une information sur la perturbation du champ proche.

Il résulte de ce qui a été dit des figures 6 à 12 que l'analyse de l'impédance de l'antenne 2, que cela soit la partie réelle et/ou imaginaire de l'impédance de l'antenne 2 permet avantageusement de détecter et/ou de caractériser un objet 5 lorsqu'il est présent dans le champ proche de l'antenne 2 du dispositif décrit.

Ainsi, en fonction des propriétés de l'antenne 2 (et de son comportement plutôt électrique ou magnétique) et de la fonction capteur à réaliser (donc du type de l'objet 5 perturbateur et de ce que l'on cherche à connaître de cet objet 5), plusieurs stratégies sont possibles. La plus simple consiste à étalonner les propriétés de l'antenne 2 en fonction du scénario de perturbation envisagé. Pour illustrer ce cas simple, il est possible d'imaginer que le dispositif décrit est un capteur de proximité dans le sens où l'objet 5 restera le même mais que sa proximité va évoluer dans le champ proche de l'antenne 2 (cas de la figure 7): La fréquence donne de façon la plus évidente la distance et dans ce cas il est possible de se limiter à cette information et de bâtir un abaque. Pour bâtir cet abaque, il y a plusieurs façons de procéder, soit par simulation électromagnétique, soit en laboratoire, soit in situ. Il est même possible d'imaginer un auto-étalonnage avec un système évolué où il est reproduit le scénario et l'analyse des données dans lequel l'extraction des courbes d'étalonnage se réalise automatiquement.

En outre, selon si l'on utilise un détecteur d'impédance vectoriel ou scalaire, les critères d'appréciation des perturbations peuvent être adaptés, complexifiés, combinés (facteur de qualité, fréquence de résonance, évolution monotone ou non de ces paramètres, ...).

Il a été évoqué précédemment l'influence du facteur de qualité de l'antenne 2. En fait, le facteur de qualité Q d'une antenne est défini comme étant le rapport entre l'énergie maximale stockée dans l'antenne et la puissance totale rayonnée. L'expression du facteur Q d'une antenne est généralement donnée sous la forme suivante:

$$Q = \frac{2\omega.\max(W_e, W_m)}{P_{rad}} \qquad (1)$$

Avec $W_e$ et $W_m$ respectivement les énergies électriques et magnétiques moyennes stockées et $P_{rad}$ la puissance rayonnée par l'antenne 2. Ce facteur Q est généralement inversement proportionnelle à la bande passante de l'antenne 2 et l'approche classique de conception des antennes dans les contextes autres que la présente invention vise à obtenir des facteurs de qualité relativement faibles pour favoriser le comportement large bande desdites antennes. Un faible facteur de qualité au regard de la formule précédente peut également signifier que les pertes par rayonnement sont élevées. L'augmentation du facteur de qualité Q de l'antenne 2 avec sa réduction de taille est un phénomène connu. Il indique que la puissance rayonnée décroit par rapport à l'énergie stockée au voisinage de l'antenne 2. Plus particulièrement, le facteur de qualité au voisinage d'une résonance peut s'évaluer à partir de l'impédance complexe à l'aide de la formule suivante :

$$Q = \frac{\omega_0}{2R_0(\omega_0)} \left| Z_0'(\omega_0) \right| \qquad (2)$$

Avec $R_0$ la partie réelle de l'impédance d'entrée de l'antenne, $Z_0'$ la dérivée de l'impédance d'entrée et $\omega_0$ la pulsation de résonance de l'antenne. Le facteur de qualité (Q) est proportionnel à la dérivée de l'impédance et constitue un critère qui permet d'évaluer la rapidité des variations de l'impédance complexe de l'antenne. Pour la présente invention, l'utilisation d'une antenne 2 avec un facteur de qualité élevé est particulièrement intéressante pour exacerber la sensibilité de l'antenne 2 en zone de champ proche. Il permet de détecter efficacement et de caractériser les altérations de l'impédance de l'antenne 2 notamment grâce aux propriétés des bandes étroites. L'augmentation du facteur de qualité de l'antenne 2 est donc un paramètre d'optimisation des performances de sensibilité de l'antenne 2 utilisée en tant que capteur à son contexte. En ce sens, on comprend que l'antenne 2 choisie dans le cadre du procédé et du dispositif possède préférentiellement un facteur de qualité Q élevé. De préférence, le facteur de qualité à vide de l'antenne est supérieur à 10, et notamment peut aller jusqu'à plusieurs centaines. Par « facteur de qualité à vide », on entend le facteur de qualité alors qu'aucun objet n'est présent dans le champ proche de l'antenne 2.

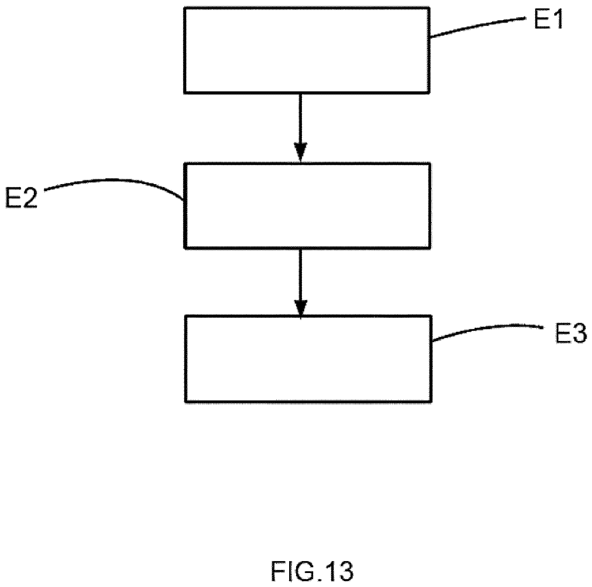

Il résulte de tout ce qui a été dit ci-avant que l'invention est aussi relative à un procédé de traitement d'un objet 5 à partir d'une antenne 2 électriquement petite, c'est-à-dire de traitement de données de l'objet 5 placé dans le champ proche de l'antenne 2. Un tel procédé (figure 13) peut comporter les étapes suivantes : un placement E1 dudit objet 5 dans le champ proche de l'antenne 2 (figure 1) notamment d'où il résulte la perturbation d'au moins un paramètre de l'antenne 2, une mesure E2 dudit au moins un paramètre de l'antenne 2, et une utilisation E3 dudit au moins un paramètre mesuré pour obtenir au moins une information relative audit objet 5 placé dans le champ proche de l'antenne 2.

Il est clair que le procédé de traitement peut comporter une étape d'utilisation du dispositif tel que décrit précédemment. Dans ce cas, l'étape de mesure peut être mise en oeuvre par l'élément de mesure 4 du module de traitement et l'étape d'utilisation peut être mise en oeuvre par le module de traitement 3.

Selon une réalisation, l'étape d'utilisation E3 comporte une étape de comparaison dudit au moins un paramètre mesuré, ou d'une valeur déterminée à partir dudit au moins un paramètre mesuré, avec des données de traitement. Les données de traitement peuvent être des abaques tels que décrits précédemment et exploitables par le module de traitement 3 pour qu'il mène à bien son analyse pour obtenir ladite au moins une information relative audit objet 5 placé dans le champ proche de l'antenne 2.

L'étape de mesure E2 dudit au moins un paramètre peut comporter une mesure d'une valeur représentative de l'impédance de l'antenne 2 d'où il résulte qu'il est possible de déterminer une partie réelle et/ou imaginaire de l'impédance de l'antenne 2. Cette étape peut être mise en oeuvre par actionnement de l'élément de mesure 4 décrit ci-avant. En ce sens, l'étape d'utilisation E3 peut comporter une étape de détermination de la partie réelle et/ou imaginaire de l'impédance d'entrée de l'antenne 2, à partir dudit au moins un paramètre mesuré. En fait, il est possible de déterminer l'impédance lorsque l'élément de mesure 4 permet une mesure vectorielle permettant d'obtenir le module et la phase du coefficient de réflexion rendant accessible la valeur de l'impédance (partie imaginaire et réelle puisque l'un ne va pas sans l'autre).

On notera que lorsque l'élément de mesure 4 utilisé est un détecteur scalaire, il est possible d'obtenir le module du coefficient de réflexion uniquement, ce qui ne permet pas de remonter à une valeur d'impédance mais peut permettre de déterminer une fréquence, un coefficient de qualité. Ces informations pouvant le cas échéant permettre de caractériser l'objet 5.

Par exemple, le procédé peut comporter une étape d'extraction d'un pic d'impédance obtenu à la résonance de l'antenne et/ou du facteur de qualité associé à ladite partie réelle et/ou imaginaire de l'impédance. En particulier, le pic d'impédance extrait et/ou le facteur de qualité extrait est comparé à des données de traitement (par exemple les abaques évoqués précédemment) pour déterminer ladite au moins une information relative audit objet placé dans le champ proche de l'antenne 2.

Il résulte de ce qui a été dit précédemment que ladite au moins une information relative audit objet 5 est choisie parmi au moins l'une des informations suivantes : une nature de l'objet 5, une taille/dimension de l'objet 5, une position de l'objet 5 par rapport à l'antenne 2. En fonction de l'information recherchée, le module de traitement 3 et/ou le procédé pourra utiliser les enseignements des figures 6 à 12.

Selon une mise en oeuvre du procédé, ce dernier comporte une étape de détection dudit objet 5 dans le champ proche de l'antenne 2. Lesdites étapes de mesure E2 d'au moins un paramètre de l'antenne 2 et d'utilisation E3 dudit au moins un paramètre mesuré étant mises en oeuvre uniquement lorsque l'objet 5 est détecté dans le champ proche de l'antenne 2. Par exemple, cette détection peut être mise en oeuvre par surveillance de l'évolution de l'impédance de l'antenne 2 de telle sorte que lorsqu'une variation de l'impédance devient supérieure à un seuil prédéterminé alors les étapes de mesure et d'utilisation sont mises en oeuvre.

On a compris que le traitement de l'objet 5 est fonction du volume occupé par le champ proche de l'antenne 2. En fonction des applications, on peut adapter les dimensions de ce volume. Bien entendu, ceci sera réalisé au moment de la conception du dispositif de telle sorte qu'il soit adapté pour un volume prédéterminé. Cette adaptation du volume délimitant le champ proche de l'antenne 2 pourrait par exemple être mise en oeuvre lors de la conception de l'antenne en modifiant la fréquence de fonctionnement de l'antenne 2. En effet, on a vu précédemment que le champ proche de l'antenne 2 était fonction de la longueur d'onde de fonctionnement de l'antenne 2 qui est elle-même fonction de la fréquence de fonctionnement de l'antenne 2 par application de l'équation suivante : $\lambda$ = c/f avec $\lambda$ la longueur d'onde de fonctionnement de l'antenne 2, c la vitesse de la lumière, et f la fréquence de fonctionnement de l'antenne 2. L'homme du métier est donc à même de modifier ces paramètres pour les adapter.

Bien entendu, il résulte de ce qui a été dit précédemment, que ladite au moins une information relative audit objet 5 placé dans le champ proche de l'antenne 2 est compatible avec l'utilisation du dispositif ou du procédé décrit. En ce sens, si le procédé et/ou le dispositif sont utilisés pour former un capteur de proximité d'un objet métallique alors les résultats de la figure 7 seront exploités, si le procédé et/ou le dispositif sont utilisés pour former un capteur de détermination de l'épaisseur d'un objet magnétique alors les résultats de la figure 9 seront exploités, etc.

Autrement dit, le procédé de traitement peut être tel qu'il présente au moins l'une des configurations suivantes :

- la taille de l'objet et le matériau étant connus, l'étape d'utilisation E3 permet de déterminer la distance de l'objet par rapport à l'antenne 2,
- la distance de séparation entre l'objet et l'antenne ainsi que la nature de l'objet (matériau) étant connues, l'étape d'utilisation E3 permet de déterminer la taille de l'objet,
- l'étape d'utilisation E3 permet de discriminer le matériau formant l'objet en fonction de la distance séparant l'objet de l'antenne.

Lors de certains tests, il a pu être mis en avant qu'une forte réduction de l'efficacité de l'antenne 2 était liée à une réduction trop importante de la taille de l'antenne 2, ce qui avait pour effet de limiter l'observation de perturbations induites par la présence de l'objet 5 dans le champ proche de l'antenne 2. En ce sens, l'efficacité de l'antenne 2 électriquement petite est préférentiellement supérieure à 0,1%, notamment supérieure à 1% pour que l'observation des perturbations liées à la présence de l'objet 5 dans le champ proche de l'antenne 2 soit satisfaisante. L'efficacité d'une antenne est bien connue de l'homme de l'art, il s'agit du rapport entre la puissance fournie à l'antenne et la puissance totale rayonnée.

Dans ce document, le centre de l'antenne est défini comme le centre de gravité de la matière électriquement conductrice de l'antenne ou comme le barycentre des matériaux constituant l'antenne, c'est-à-dire la matière électriquement conductrice de l'antenne et l'éventuel substrat diélectrique sur lequel est déposée la matière électriquement conductrice de l'antenne.

Dans ce document, par simplification, on emploie le nom de grandeurs physiques pour désigner leurs valeurs. Ainsi, on dit par exemple qu'on mesure/détermine/compare/calcule/utilise un paramètre pour dire qu'on mesure/détermine/compare/calcule/utilise une valeur de ce paramètre.

**Revendications**

1. Dispositif (1) comprenant une antenne (2) électriquement petite, et un module de traitement (3) comportant un élément de mesure (4) relié à l'antenne (2) pour mesurer au moins un paramètre d'impédance de l'antenne (2) sur une gamme de fréquences de fonctionnement de l'antenne, ledit module de traitement (3) étant configuré pour utiliser un décalage en fréquence d'un pic d'impédance dudit au moins un paramètre mesuré pour obtenir au moins une information de taille, de position ou de nature de matériau relative à un objet (5) placé dans un champ proche de l'antenne (2).

2. Dispositif selon la revendication précédente, **caractérisé en ce que** l'antenne (2) est en totalité incluse dans une sphère de dimensionnement (6) dont le rayon est inférieur à $\lambda/10$ lorsque l'antenne (2) est située au centre de ladite sphère de dimensionnement (6), où $\lambda$ correspond à la longueur d'onde de fonctionnement de l'antenne (2).

3. Dispositif selon l'une quelconque des revendications précédentes **caractérisé en ce qu'**il comporte un module d'émission/réception (12) relié à ladite antenne de sorte à permettre l'émission et/ou la réception de données.

4. Dispositif selon la revendication précédente, **caractérisé en ce qu'**il comprend un coupleur (9) directif du module de traitement (3) couplé à l'antenne (3) ou une capacité (14), et **en ce qu'**il comporte un mode de fonctionnement dans lequel au moins certaines mesures réalisées par l'élément de mesure (4) n'inhibent pas la réception et/ou l'émission desdites données ou aucune mesure réalisée par l'élément de mesure (4) n'inhibe la réception et/ou l'émission desdites données.

5. Dispositif selon l'une des revendications précédentes, **caractérisé en ce que** l'élément de mesure (4) est un élément de mesure d'un paramètre représentatif de l'impédance de l'antenne (2) et/ou **en ce que** l'antenne (2) présente un facteur de qualité à vide (Q) supérieur à 10 et/ou **en ce que** l'élément de mesure (4) est un détecteur scalaire ou vectoriel relié à l'antenne (2).

6. Procédé de détermination d'au moins une information relative à un objet (5) à l'aide d'une antenne (2) électriquement petite, ledit procédé comportant les étapes suivantes :

   - un placement (E1) dudit objet (5) dans un champ proche de l'antenne (2),
   - une mesure (E2) d'au moins un paramètre d'impédance de l'antenne (2) sur une gamme de fréquences de fonctionnement de l'antenne,
   - une extraction d'une donnée relative à un pic d'impédance de l'antenne,
   - une étape d'observation d'un décalage en fréquence du pic d'impédance de l'antenne,
   - une utilisation (E3) dudit décalage en fréquence du pic d'impédance de sorte à obtenir l'au moins une information de taille, de position ou de nature de matériau relative audit objet (5) placé dans le champ proche de l'antenne (2).

7. Procédé selon la revendication 6, **caractérisé en ce que** l'étape d'utilisation comporte une étape de comparaison dudit au moins un paramètre mesuré, ou d'une valeur déterminée à partir dudit au moins un paramètre mesuré, avec des données de traitement.

8. Procédé selon l'une des revendications 6 ou 7, **caractérisé en ce que** l'étape de mesure (E2) dudit au moins un paramètre comporte une mesure d'une valeur représentative de l'impédance de l'antenne (2).

9. Procédé selon la revendication précédente, **caractérisé en ce que** l'étape d'utilisation comporte une étape une détermination d'une partie réelle et/ou d'une partie imaginaire de l'impédance de l'antenne à partir dudit au moins un paramètre mesuré.

10. Procédé selon l'une des revendications 6 à 9, **caractérisé en ce qu'**il comporte une étape d'extraction du facteur de qualité associé à une partie réelle et/ou imaginaire de l'impédance d'antenne.

11. Procédé selon la revendication précédente, **caractérisé en ce que** la donnée relative au pic d'impédance extraite et/ou le facteur de qualité extrait est comparé à des données de traitement de sorte à déterminer ladite au moins une information relative audit objet placé dans le champ proche de l'antenne.

12. Procédé selon l'une des revendications 6 à 11, **caractérisé en ce que** ladite au moins une information relative audit objet (5) est choisie parmi au moins l'une des informations suivantes : la nature de l'objet (5), une dimension de l'objet (5), une position de l'objet (5) par rapport à l'antenne (2).

13. Procédé selon l'une des revendications 6 à 12, **caractérisé en ce qu'**il comporte une étape de détection dudit objet (5) dans le champ proche de l'antenne (2), lesdites étapes de mesure (E2) d'au moins un paramètre de l'antenne, et d'utilisation (E3) dudit au moins un paramètre mesuré étant mises en oeuvre uniquement lorsque le objet (5) est détecté dans le champ proche.

14. Procédé de fonctionnement d'un dispositif selon l'une des revendications 1 à 5, **caractérisé en ce que** le dispositif comprend un coupleur (9) directif du module de traitement (3) couplé à l'antenne (3) ou une capacité (14), et **en ce que** le procédé de fonctionnement comprend un mode de fonctionnement dans lequel au moins certaines mesures réalisées par l'élément de mesure (4) n'inhibent pas la réception et/ou l'émission desdites données ou dans lequel aucune mesure réalisée par l'élément de mesure (4) n'inhibe la réception et/ou l'émission desdites données.

**Patentansprüche**

1. Vorrichtung (1) mit einer elektrischen kleinen Antenne (2) und einem Verarbeitungsmodul (3), das ein Messelement (4) aufweist, das mit der Antenne (2) verbunden ist, um mindestens einen Impedanzparameter der Antenne (2) über einen Bereich von Betriebsfrequenzen der Antenne zu messen, wobei das Verarbeitungsmodul (3) so konfiguriert ist, dass es eine Frequenzverschiebung einer Impedanzspitze des mindestens einen gemessenen Parameters verwendet, um mindestens eine Information über Größe, Position oder Materialbeschaffenheit zu erhalten, die sich auf ein Objekt (5) bezieht, das in einem Nahfeld der Antenne (2) platziert ist.

2. Vorrichtung nach dem vorhergehenden Anspruch, **dadurch gekennzeichnet, dass** die Antenne (2) vollständig in einer Dimensionierungskugel (6) enthalten ist, deren Radius kleiner als $\lambda/10$ ist, wenn sich die Antenne (2) in der Mitte der Dimensionierungskugel (6) befindet, wobei $\lambda$ der Betriebswellenlänge der Antenne (2) entspricht.

3. Vorrichtung nach einem der vorhergehenden Ansprüche, **dadurch gekennzeichnet, dass** sie ein Sende-/Empfangsmodul (12) aufweist, das mit der Antenne so verbunden ist, dass es das Senden und/oder Empfangen von Daten ermöglicht.

4. Vorrichtung nach dem vorhergehenden Anspruch, **dadurch gekennzeichnet, dass** sie einen Richtkoppler (9) des Verarbeitungsmoduls (3) aufweist, der mit der Antenne (3) oder einer Kapazität (14) gekoppelt ist, und dass sie einen Betriebsmodus aufweist, in dem mindestens einige der von dem Messelement (4) durchgeführten Messungen den Empfang und/oder das Senden der Daten nicht hemmen oder keine von dem Messelement (4) durchgeführte Messung den Empfang und/oder das Senden der Daten hemmt.

5. Vorrichtung nach einem der vorhergehenden Ansprüche, **dadurch gekennzeichnet, dass** das Messelement (4) ein Element zum Messen eines Parameters ist, der für die Impedanz der Antenne (2) repräsentativ ist, und/oder dass die Antenne (2) einen Leerlauf-Qualitätsfaktor (Q) von mehr als 10 aufweist und/oder dass das Messelement (4) ein skalarer oder vektorieller Detektor ist, der mit der Antenne (2) verbunden ist.

6. Verfahren zum Bestimmen mindestens einer Information, die sich auf ein Objekt (5) bezieht, mithilfe einer elektrischen kleinen Antenne (2), wobei das Verfahren die folgenden Schritte aufweist:

   - eine Platzierung (E1) des Objekts (5) in einem Nahfeld der Antenne (2),
   - eine Messung (E2) von mindestens einem Impedanzparameter der Antenne (2) über einen Bereich von Betriebsfrequenzen der Antenne,
   - eine Extraktion eines Datenelements, das sich auf eine Impedanzspitze der Antenne bezieht,
   - einen Schritt des Beobachtens einer Frequenzverschiebung der Impedanzspitze der Antenne,
   - eine Verwendung (E3) der Frequenzverschiebung der Impedanzspitze, um die mindestens eine Information über Größe, Position oder Materialbeschaffenheit zu erhalten, die sich auf ein Objekt (5) bezieht, das im Nahfeld der Antenne (2) platziert ist.

7.  Verfahren nach Anspruch 6, **dadurch gekennzeichnet, dass** der Schritt des Verwendens einen Schritt des Vergleichens des mindestens einen gemessenen Parameters oder eines aus dem mindestens einen gemessenen Parameter ermittelten Wertes mit Verarbeitungsdaten aufweist.

8.  Verfahren nach einem der Ansprüche 6 oder 7, **dadurch gekennzeichnet, dass** der Schritt des Messens (E2) des mindestens einen Parameters eine Messung eines Wertes aufweist, der repräsentativ für die Impedanz der Antenne (2) ist.

9.  Verfahren nach dem vorhergehenden Anspruch, **dadurch gekennzeichnet, dass** der Schritt des Verwendens einen Schritt des Bestimmens eines Realteils und/oder eines Imaginärteils der Impedanz der Antenne aus dem mindestens einen gemessenen Parameter aufweist.

10. Verfahren nach einem der Ansprüche 6 bis 9, **dadurch gekennzeichnet, dass** es einen Schritt des Extrahierens des Qualitätsfaktors aufweist, der einem Real- und/oder Imaginärteil der Antennenimpedanz zugeordnet ist.

11. Verfahren nach dem vorhergehenden Anspruch, **dadurch gekennzeichnet, dass** der extrahierte Datensatz, der sich auf die Impedanzspitze bezieht, und/oder der extrahierte Qualitätsfaktor mit Verarbeitungsdaten verglichen wird, um die mindestens eine Information zu bestimmen, die sich auf das Objekt bezieht, das im Nahfeld der Antenne platziert ist.

12. Verfahren nach einem der Ansprüche 6 bis 11, **dadurch gekennzeichnet, dass** die mindestens eine Information, die sich auf das Objekt (5) bezieht, aus mindestens einer der folgenden Informationen ausgewählt wird: die Art des Objekts (5), eine Abmessung des Objekts (5), eine Position des Objekts (5) im Verhältnis zur Antenne (2).

13. Verfahren nach einem der Ansprüche 6 bis 12, **dadurch gekennzeichnet, dass** es einen Schritt des Erfassens des Objekts (5) im Nahfeld der Antenne (2) aufweist, wobei die Schritte des Messens (E2) des mindestens einen Parameters der Antenne und des Verwendens (E3) des mindestens einen gemessenen Parameters nur dann durchgeführt werden, wenn das Objekt (5) im Nahfeld erfasst wird.

14. Verfahren zum Betrieb einer Vorrichtung nach einem der Ansprüche 1 bis 5, **dadurch gekennzeichnet, dass** die Vorrichtung einen Richtkoppler (9) des Verarbeitungsmoduls (3) aufweist, der mit der Antenne (3) oder einer Kapazität (14) gekoppelt ist, und dass das Verfahren zum Betrieb einen Betriebsmodus aufweist, in dem mindestens einige der von dem Messelement (4) durchgeführten Messungen den Empfang und/oder das Senden der Daten nicht hemmen oder in dem keine von dem Messelement (4) durchgeführte Messung den Empfang und/oder das Senden der Daten hemmt.


**Claims**

1.  Device (1) comprising an electrically small antenna (2), and a processing module (3) comprising a measuring element (4) connected to the antenna (2) for measuring at least one impedance parameter of the antenna (2) over a range of operating frequencies of the antenna, said processing module (3) being configured for using a shift in frequency of an impedance peak of said at least one measured parameter for obtaining at least one piece of size, position or nature-of-material information relating to an object (5) placed in a near field of the antenna (2).

2.  Device according to the preceding claim, **characterized in that** the antenna (2) is wholly included in a sizing sphere (6) the radius of which is less than $\lambda/10$ when the antenna (2) is located at the centre of said sizing sphere (6), where $\lambda$ corresponds to the operating wavelength of the antenna (2).

3.  Device according to either one of the preceding claims, **characterized in that** it comprises a transceiving module (12) connected to said antenna so as to make it possible to transmit and/or receive data.

4.  Device according to the preceding claim, **characterized in that** it comprises a directional coupler (9) of the processing module (3) coupled to the antenna (3) or a capacitor (14), and **in that** it comprises an operating mode in which at least some measurements performed by the measuring element (4) do not inhibit the reception and/or the transmission of said data or no measurement performed by the measuring element (4) inhibits the reception and/or the transmission of said data.

**5.** Device according to one of the preceding claims, **characterized in that** the measuring element (4) is an element for measuring a parameter representative of the impedance of the antenna (2) and/or **in that** the antenna (2) has a no-load quality factor (Q) greater than 10 and/or **in that** the measuring element (4) is a scalar or vector detector connected to the antenna (2).

**6.** Method for determining at least one piece of information relating to an object (5) with the aid of an electrically small antenna (2), said method comprising the following steps:

- placing (E1) said object (5) in a near field of the antenna (2),
- measuring (E2) at least one impedance parameter of the antenna (2) over a range of operating frequencies of the antenna,
- extracting a datum relating to an impedance peak of the antenna,
- a step of observing a shift in frequency of the impedance peak of the antenna,
- using (E3) said shift in frequency of the impedance peak so as to obtain the at least one piece of size, position or nature-of-material information relating to said object (5) placed in the near field of the antenna (2) .

**7.** Method according to Claim 6, **characterized in that** the step of using comprises a step of comparing said at least one measured parameter, or a value determined on the basis of said at least one measured parameter, with processing data.

**8.** Method according to one of Claims 6 and 7, **characterized in that** the step of measuring (E2) said at least one parameter comprises measuring a value representative of the impedance of the antenna (2).

**9.** Method according to the preceding claim, **characterized in that** the step of using comprises a step of determining a real part and/or an imaginary part of the impedance of the antenna on the basis of said at least one measured parameter.

**10.** Method according to one of Claims 6 to 9, **characterized in that** it comprises a step of extracting the quality factor associated with a real and/or imaginary part of the antenna impedance.

**11.** Method according to the preceding claim, **characterized in that** the datum relating to the extracted impedance peak and/or the extracted quality factor is compared with processing data so as to determine said at least one piece of information relating to said object placed in the near field of the antenna.

**12.** Method according to one of Claims 6 to 11, **characterized in that** said at least one piece of information relating to said object (5) is chosen from among at least one of the following pieces of information: the nature of the object (5), a dimension of the object (5), a position of the object (5) in relation to the antenna (2).

**13.** Method according to one of Claims 6 to 12, **characterized in that** it comprises a step of detecting said object (5) in the near field of the antenna (2), said steps of measuring (E2) at least one parameter of the antenna and using (E3) said at least one measured parameter being implemented only when the object (5) is detected in the near field.

**14.** Operating method for a device according to one of Claims 1 to 5, **characterized in that** the device comprises a directional coupler (9) of the processing module (3) coupled to the antenna (3) or a capacitor (14), and **in that** the operating method comprises an operating mode in which at least some measurements performed by the measuring element (4) do not inhibit the reception and/or the transmission of said data or in which no measurement performed by the measuring element (4) inhibits the reception and/or the transmission of said data.

FIG.1

FIG.2

FIG.3

FIG.4

FIG.5

FIG.6

FIG.7

FIG.8

**FIG.9**

**FIG.10**

C1 pas d'objet
C2 -10
C3 -15
C4 -20
C5 -25

**FIG.11**

C1 pas d'objet
C2 métal
C3 diélectrique
C4 magnétique

**FIG.12**

FIG.13

## RÉFÉRENCES CITÉES DANS LA DESCRIPTION

**Documents brevets cités dans la description**

- US 2015233987 A1
- EP 2509222 A
- EP 2509227 A

**Littérature non-brevet citée dans la description**

- **DE H. A WHEELER.** *The Radiansphere Around a small antenna*
- **D'HAROLD A.** *Proceedings of the IRE,* 1959, 1325-1331